# EUROPEAN PATENT SPECIFICATION

(11) **EP 0 478 175 B1**
(45) Date of publication and mention of the grant of the patent: **22.11.1995**
(21) Application number: 91308276.4
(22) Date of filing: 11.09.1991
(51) Int. Cl.: H04L 12/26

(54) **A protocol analyzer**
Protokollanalysator
Analyseur de protocole

(30) Priority: 13.09.1990 EP 90310017
(43) Date of publication of application: 01.04.1992
(73) Proprietor: Hewlett-Packard Company, Palo Alto, California 94304 (US)
(72) Inventor: I'Anson, Colin Stephen, Stoke Gifford, Bristol BS12 6XL (GB); McKee, Neil, Horfield, Bristol (GB); Galloway, James Robertson, W-7038 Holzgerlingen (DE)
(74) Representative: Squibbs, Robert Francis

(56) References cited:
- EP-A- 0 332 286
- EP-A- 0 371 656
- US-A- 4 748 348
- COMPUTER DESIGN.vol. 23, no. 7, June 1984, LITTLETON, MASSACHUSETTS US pages 21 - 23; P. KILLMON: 'PROTOCOL ANALYZERS TAKE ON FUNCTIONS TO DEAL WITH NETWORK COMPLEXITIES'
- AT & T TECHNICAL JOURNAL. vol. 64, no. 10, December 1985, NEW YORK US pages 2413 - 2433; G.J. HOLZMANN: 'TRACING PROTOCOLS'

## Description

The present invention relates to a protocol analyzer for monitoring a selected communication connection being conducted in accordance with a predetermined protocol between two entities over a data network.

A data network is a network (which may or may not include nodes performing switching functions) interconnecting a plurality of data processing devices. Such networks are often used to interconnect a number of computers, but can also be used for other data communication purposes, such as telephone-type networks.

Information is generally transmitted in the form of messages, and an individual message will often be divided into a number of discrete packets. In such a network, the routing of the packets may be at least partially controlled or determined by the various nodes in the network. In some cases, the route taken by the packets of a message is set up for a connection and all packets follow that route; in others, the various packets for a connection may follow different routes through the network. Usually, a number of packets of different connections will be interleaved on any particular link between two adjacent nodes in the network.

Such networks are liable to suffer from faults. The cause and/or effect of a fault may both be immediately evident. For example, the physical linkage between two nodes may be interrupted; or no packets may be received from a particular node. However, network faults are often subtle in both their causes and effects, and it may even not be clear whether there is a fault or not; for example, a poor response time of the network may be due to a fault or it may be due to an unusual and extreme workload imposed on it.

A variety of instruments are available for network fault diagnosis (using the term "diagnosis" in a broad sense) (c.f. for example document EP-A-0 332 286). At the lowest level, there are voltage level testers, continuity testers, etc. At a slightly higher level, there are signal presence testers such as LED instruments.

However, many network faults occur at a higher level and take the form of a violation of the operating procedure, or protocol, which the communicating entities have agreed (generally implicitly) will govern their communication. Matters are further complicated by the fact that when, for example, two computers communicate over a network, they generally do so using a multi-layered protocol stack to format and control the communication process. In such cases, at least conceptually, a protocol entity of each layer of the protocol stack of one computer communicates with a corresponding protocol entity of the same layer of the other computer, this communication being by the exchange of so-called "protocol data units" that carry control information relevant to the protocol layer concerned as well as user data. Thus, several protocols, each at a different level, are concurrently in use, any one of which could give rise to a communication fault.

Because a protocol is describable in terms of a set of states with transitions between the states being determined, at least in part, by the type of protocol data unit received (this type being set by the control information of the protocol data unit), it is possible to identify protocol violations by looking at the sequence of protocol data units passing over the network in respect of the relevant pair of communicating entities. A protocol analyzer is an instrument designed to carry out such a task.

In using a protocol analyzer, the analyzer is attached to a suitable point in the network. It detects and analyses packets to produce a listing of the protocol data units relevant to the protocol being monitored (generally a low-level, e.g link level protocol). By inspecting this listing, the operator can see the nature of the traffic at the point and recognize various kinds of errors.

The simplest form of listing is a listing of all protocol data units associated with the protocol being monitored. However, analysis of such a "raw" listing is an onerous task. There will usually be a large variety of sets of such protocol data units passing any given point in the network, each set having a different source and/or destination entity. Further, both the number and the complexity of the protocols used in a typical large system are large.

It has therefore become known to make the data collection by protocol analyzers "programmable". That is, the analyzer can be set by the user to respond only to conditions determined by the user. These conditions can be regarded as a filter which operates on the input data stream, and can be described as "mask" filtering.

The user can thereby select only protocol data units passing between two selected protocol entities. The user can also set the analyzer to respond only to certain sequences of protocol data units; obviously, the chosen sequences will usually be those indicative of errors or abnormal conditions. As just noted, however, the complexity of a protocol can often be high, and the number of protocols or variations thereof is also liable to be high. Thus programming the analyzer is an arduous task, and the user is quite likely to program it so as to detect only a limited number of "likely" abnormal conditions, and rely on a continuous scrolling display of all protocol data units to detect other abnormal conditions.

It is an object of the present invention to provide a protocol analyzer that facilitates the task of detecting protocol violations.

According to the present invention, there is provided a protocol analyzer for monitoring a selected communication connection being conducted in accordance with a predetermined protocol between two entities by the exchange of protocol data units over a data network, said protocol being a cyclically-operating, multiple-state protocol state-to-state transitions of which are caused by differing types of protocol data units, and said network being of the type that can support a plurality of simultaneous communication connections between different pairs of entities, said analyzer comprising:
- **monitoring means** for monitoring the network to derive protocol-unit signals indicative of protocol data units relevant to said selected connection;
- **protocol-follower means** including **current-state memory means** for storing an indication of the current protocol state of said selected connection, said protocol-follower means being conditioned in dependence on the states of said protocol, what types of protocol data units are validly received in each state, and any resulting change in state caused by each validly-received protocol data unit, to follow the execution of said protocol in relation to said selected connection, by examination of each said protocol-unit signal with reference to the current protocol state as indicated by said current-state memory means, said protocol-follower means being operative to update said indication of the current protocol state as appropriate; and
- **alarm means** operatively associated with said protocol-follower means and arranged to generate an output indication when a said relevant protocol data unit, as represented by the corresponding protocol-unit signal, is an invalid one for the current protocol state.

Due to this arrangement, all protocol violations will be detected without each possible violation having to be separately programmed into the protocol analyzer and without the user being required to monitor a listing of protocol data units the vast majority of which conform to the protocol.

The protocol-follower means and alarm means together form what may be termed a "context" or "behavioural" filter.

Preferably, the protocol-follower means is conditioned in dependence on said protocol as considered in terms of the possible states of the overall connection having regard solely to protocol data units exchangeable between the entities. However, it is also possible for the protocol-follower to be conditioned in dependence on said protocol as considered at the communicating entities, the protocol-follower means being operative to track the progress of the connection of each communicating entity separately with the current protocol state of each entity being held in the current-state memory means.

Generally, the relevant protocol information will be stored in a state memory in the protocol-follower means although it would also be possible to provide dedicated hardware emulating a protocol state machine. In the former case, the state memory advantageously comprises a two-dimensional look-up table accessed by current state and protocol-data-unit type as indicated by said protocol-unit signal, said table having for each state, a valid-unit entry for each protocol-data-unit type validly received in that state and an invalid-unit entry for invalid protocol-data-unit types, each said valid-unit entry indicating the protocol state following receipt of that protocol-data-unit type concerned.

The protocol analyzer may include output means controlled by the alarm means to generate a protocol-data-unit-representing output only for each protocol data unit indicated as invalid by the alarm means. Alternatively, the output means can be arranged to generate a protocol-data-unit-representing output for each said relevant protocol data unit, the output means being controlled by the alarm means to distinguish invalid protocol data units from valid protocol data units. As a further alternative, the output means may operate to generate a protocol-data-unit-representing output for each of a limited number of valid relevant protocol data units that immediately precede an invalid protocol data unit as well as for the invalid protocol data unit itself.

In order to permit the user to change what is considered a violation (for example, where the protocol actually in use is a variant of the one conditioning the protocol-follower), the conditioning of said protocol-follower means is preferably user modifiable.

Advantageously, the protocol-follower means is so conditioned as to permit the user to select predetermined protocol data units that are otherwise valid in particular protocol states, for identification by said alarm means when occurring in those states (these predetermined units, are, for example, ones that are unusual, though valid, in a particular state). Operation without this feature would result in the detection of only strictly protocol-violating events ("strong filtering"), while operation with the feature selected would result in the automatic detection of the permitted but unusual sequences as well ("weak filtering"). The permitted but unusual sequences could of course be indicated in a manner distinguishing them from the strictly forbidden sequences.

A protocol analyzer embodying the present invention will now be described, by way of non-limiting example, with reference to the accompanying diagrammatic drawings, in which:
Figure 1 is a diagram illustrating protocol stacks of two communicating end systems;
Figure 2 is a diagram illustrating an allowed sequence of protocol-data-unit types exchangeable between corresponding protocol entities according to a pre-determined protocol;
Figure 3 is a state transition diagram for the protocol associated with Figure 2, considered from the point of view of the overall connection established between the communicating protocol entities;
Figure 4 is a block diagram of the protocol analyzer embodying the invention;
Figure 5 is a more detailed block diagram of a protocol state memory and processing unit of the Figure 4 protocol analyzer; and
Figure 6 is a state transition diagram for the protocol associated with Figure 2, considered from the point of view of the two communicating protocol entities.

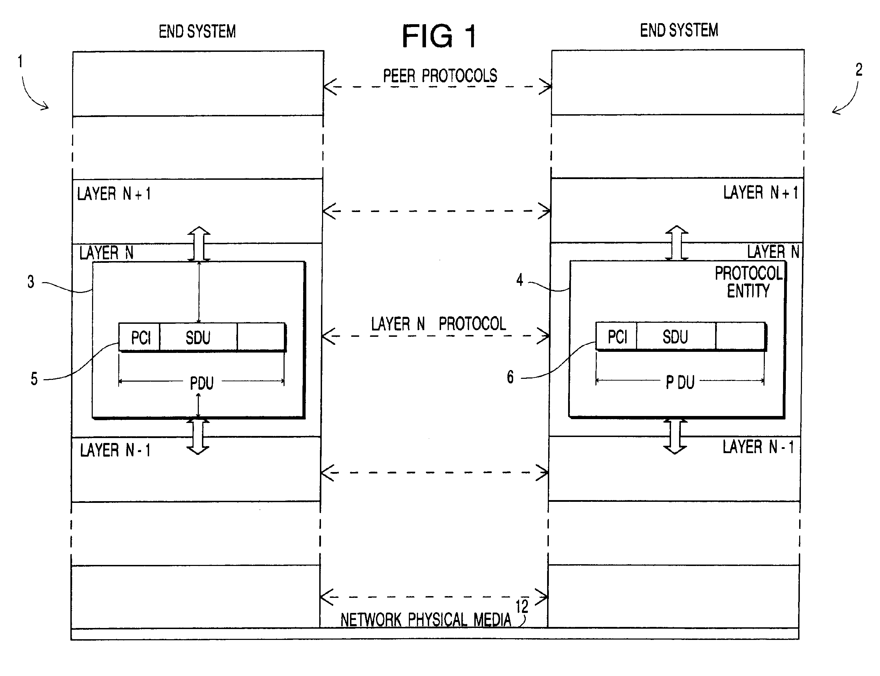

Figure 1 of the accompanying drawings shows conceptual protocol stacks 1 and 2 operated by two end systems in communicating with each other over a network (12). Each protocol stack 1,2 is made up of a number of different layers each of which performs a particular task in the communication process. Considering by way of explanation, layer N in each protocol stack 1,2, this layer N provides services to the layer above (layer N+1) and in doing so utilizes services provided by the layer below (layer N-1 ).

Within each layer N a protocol entity 3,4 controls the carrying out of the communication tasks assigned to that layer, this control being effected in coordination with the corresponding protocol entity of the communicating end system. Conceptually the protocol entities 3,4 in the same protocol layer of the communicating end systems communicate and coordinate with each other in accordance with a peer protocol (for layer N this is the layer N protocol shown in Figure 1). The peer protocol defines the form and sequencing of messages passed between the peer protocol entities 3,4 in the form of protocol data units 5,6. Each protocol data unit (PDU) 5,6 contains protocol control information PCI and one or more service data units SDU, the latter being data which the layer N protocol entity is handling on behalf of the layer N+1 above.

Whilst conceptually the peer protocol entities 3,4 are communicating with each other by passing protocol data units directly between themselves, in practice, of course, the protocol data units must pass down one protocol stack, across the network 12 and up the other protocol stack to the relevant layer N. A protocol data unit passed by the protocol entity of layer N down to layer N-1 is treated by that latter layer as a service data unit SDU and handled appropriately.

Such conceptual layering of communication protocol stacks is well known in the art - see, for example, the seven-layer OSI (Open Systems Interconnect) model defined by the International Standards Organization (International Standard ISO7498). It will be appreciated that in practice the protocol stacks are implemented primarily in software, although the lower levels may well be effected using dedicated hardware.

A protocol entity can be arranged to handle multiple connections simultaneously, each connection being used to transfer data to/from a different end-system process. In this case, it is, of course, necessary for each connection to be uniquely identified so that the entity knows which protocol data unit relates to which connection. By way of example, protocol entities running the well known transmission control protocol TCP, use pairings of endpoint to identify a connection, where an endpoint is the combination of a parameter (IP address) identifying the end system concerned (or, more accurately, an interface of the end system to the network), and a parameter (port number) indicating the source/destination within the end system with which the TCP protocol entity is to communicate. A fuller explanation of TCP connection identification may be found in a reference work such as "Internetworking with TCP/IP", Douglas E. Comer, Volume 1, Second Edition 1991, Prentice-Hall.

From the foregoing, it can be seen that even when only a single pair of end systems intercommunicate, a number of different protocols are being simultaneously operated at different levels between pairs of protocol entities, each such pair effectively conducting one or more communication connections.

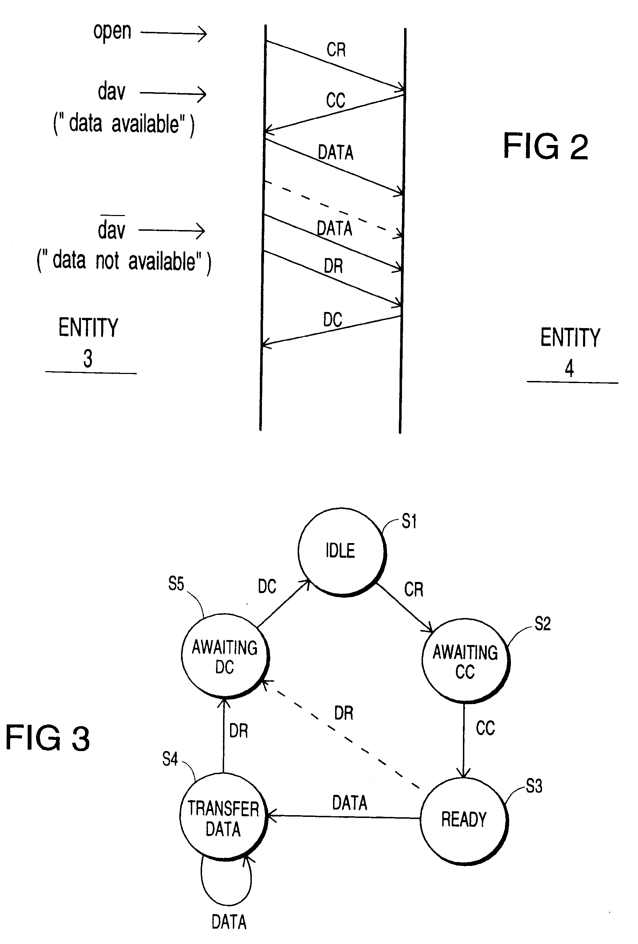

The peer protocol controlling communication between corresponding protocol entities will often specify that certain types of protocol data units (as defined by the protocol control information carried by the units) must be preceded and/or followed by certain types of other protocol data units. Figure 2 illustrates for a simple protocol a typical allowable sequence of protocol data units types. More particularly, in response to a request " Open" from the protocol layer N+1 to establish a communicating connection, the protocol entity 3 sends out a connection request (CR) via a corresponding protocol data unit to its peer protocol entity 4 in the end system with which it is desired to establish communication. On receiving this request, the peer entity 4 returns a connection confirm (CC) message (assuming that the entity 4 is ready to receive data). Thereafter, and while data is available to the entity 3 (as indicated by a signal "dav"). The protocol entity 3 will send data in protocol data units to the protocol entity 4. In due course, no more data is available and the protocol entity 3 sends a disconnect request (DR) and the entity 4 responds with a disconnect confirm (DC) message.

The protocol governing communication between the entities 3 and 4 can be viewed in terms of the allowable sequences of protocol data units that can appear on the network 12. Figure 3 is a state transition diagram for the protocol used for the Figure 2 communication viewed this way. The Figure 3 state transition diagram comprises five states S1 to S5 with transition between the states occurring in correspondence to particular types of protocol data units being transferred across a network. It will be appreciated that this view of the protocol is very much a connection view as seen from the network and is a passive one (i.e, no actions are consequent on a change of state). More particularly, initially no connection is present between the protocol entities 3 and 4 and the connection is effectively in its Idle State S1. In due course, one protocol entity will seek to establish communication with a peer protocol entity and a communication request (CR) will appear on the network moving the overall connection to an "Awaiting CC" state S2 in which the connection is next expecting to see a connection confirm (CC) protocol data unit. When such a protocol data unit arrives, the connection moves into a "ready" state S3 indicating that both the protocol entities 3,4 are ready for the transfer of data. In due course, a first data-bearing protocol data unit is passed over the network and the "transfer data" state S4 is accordingly entered. As further data is transferred, the connection remains in its transfer data state S4. When data transfer is complete a disconnect request (DR) will appear on the network and the connection moves into its "Awaiting DC " state S5 in which the next expected message will be a disconnect confirm one. When this latter message passes over the network, the connection moves back into its Idle State S1.

The Figure 3 state transition diagram also provides for one further transition, this being a transition from the ready state S3 directly to the "Awaiting DC" state S5 in response to the receipt of a disconnect request (DR) message before any data has been transferred. This transition is shown in dashed lines in Figure 3 because although it is an allowable transition, it is unusual for a connection to be closed down without the transfer of any data.

It will be appreciated that the protocol represented by Figure 3 is a very simple one and that, in fact, the state transition diagram does not adequately deal with all eventualities; however, the protocol described above with reference to Figures 2 and 3 is only illustrated for the purposes of explaining the operation of the protocol analyzer of the invention and does not, of course, form any part of the present invention.

As already noted, each protocol entity may, in fact, be running more than one communication connection at any one time with each such connection being at a different state in its protocol cycle. If this is the case the protocol control information part of each PDU will contain sufficient information to associate the protocol data unit with a particular connection being run by the protocol entity.

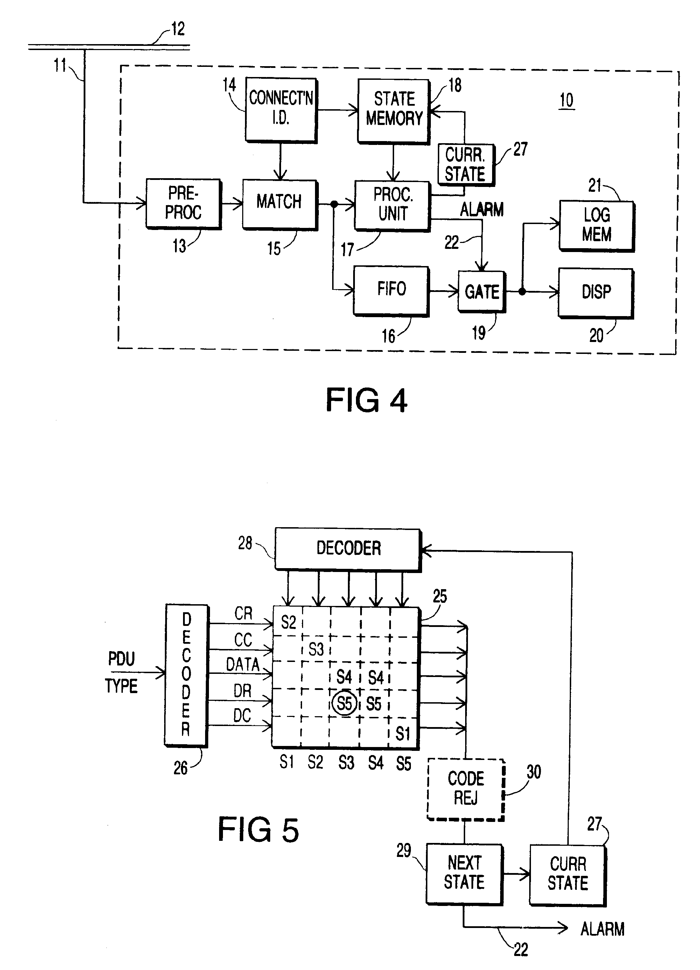

Referring now to Figure 4, the protocol analyzer 10 embodying the invention is coupled at 11 to a channel 12 in the data network being monitored (obviously the analyzer can be attached instead to a node of the network). The analyzer is thus fed with the packets passing along the channel 12.

Each packet on the channel 12 is picked off and fed to a pre-processing unit 13, which identifies and separates the various components of the packet, including, in particular, connection-identifying parameters. The identifying parameters of the connection to be monitored are set by the user in a store 14, these parameters including end-system pairing, protocol entities involved, and a parameter for distinguishing between multiple connections involving the same entities. The stored connection-identifying parameters are matched against those derived by the unit 14 in a match unit 15 to identify PDUs relevant to the connection of interest. The match unit 15 passes on the type of each relevant PDU to a FIFO store 16.

The PDU types passing through the unit 15 are also fed to a protocol-follower constituted by a processing unit 17, a current state memory 27 for holding the current state of the protocol relevant to the connection under consideration, and a protocol state memory 18 holding data that indicates for each state of the relevant protocol, what types of PDU are validly received when that state is the current state, and what state transition, if any, is caused by such receipt. Where several protocols are being simultaneously operated (for example, peer protocols of different layers of the protocol stacks of two communicating end systems), then the part of the memory 18 holding data on the protocol relevant to the connection being monitored, is selectively enabled by an appropriate enabling signal generated by the connection identification unit 14.

For each PDU type passed on by the match unit 15, the processing unit 17 determines by reference to the data held in the memory 18, whether the type is a valid one for the current protocol state. Where the PDU type is not a valid one, the unit 17 generates an alarm signal on line 22 which enables a gate 19, allowing the sequence of PDU types leading up to the protocol violation, as well as the violating PDU type, to pass to a display unit 20 and a log store 21. If the PDU is a valid one, the processing unit 17 updates the memory 27 to hold the new current protocol state of the connection.

Sequences violating the protocol are thus displayed to the user, and stored in unit 21 for later analysis if desired. The user can see not just the protocol-violating PDU type but the whole sequence leading up to it, because on a protocol violation, that whole sequence is contained in the store 16. The gate 19 is of course kept enabled while the whole sequence passes through it.

Figure 5 is a block diagram of the protocol-follower shown as units 17, 18 and 27 in Figure 1, though the division into those units is functional; as will be seen, the various components illustrated in Figure 5 that go to make up the units 17 and 18 cannot readily be separated. By way of example, the protocol-follower will be described below in relation to the protocol illustrated in Figures 2 and 3.

The protocol state transition table (Figure 3) is effectively stored in a matrix store 25. In this store, the columns represent the states (S1 to S5), and the rows represent the PDU types (CR, CC, DATA, DR, and DC) which cause state transitions. For each possible transition (from a current state to a next state in response to a PDU type), the matrix store 25 contains the next state code in the element at the intersection of the column for the current state and the row for the PDU type. Thus the transition from state S3 induced by a PDU type DATA is to state S4, and is stored by the code S4 in the element at the intersection of column S3 and row DATA. All other matrix store locations contain null entries.

The incoming PDU type from unit 15 is fed to a row decoder 26 to select the appropriate row of the matrix 25. Also, the current state stored in the current state memory 27 is passed to a state decoder 28 to select the appropriate column of the matrix 25. If the element so selected contains a state code, that code is read out and passed to a next state store 28. The fact that that element contains a state code indicates that the PDU type is a valid one. If however the selected element does not contain a state code, the next state store 29 will remain empty. This condition, which is caused by an invalid PDU type, is indicated by an alarm signal on the line 22.

After the matrix store 25 has been read and the new state (if any) read into the next state store 29, the contents of the next state store 29 are transferred to the current state memory 27 (so erasing its previous contents) in readiness for the reception of the next PDU type.

The circled entry for state S3 and row DR is the permitted but abnormal transition mentioned above. If desired, this entry may have a distinguishing code attached to it, with the output of the matrix 25 being fed to the next state store 29 via a code rejection unit 30 which can be enabled or disabled at the option of the user. If disabled, the unit 30 will allow all state values to pass; if enabled, it will allow only state values without a distinguishing code to pass. This implements the strong and weak filtering option described above.

Also, means may be provided whereby the user can enter and store selected transitions (i.e. selected PDU type sequences), which are then inhibited from being recognized as violations, and/or suppress selected transitions, which are then treated as violations. This may be done by providing a user-modifiable matrix which is operated in parallel with the main protocol state table (matrix store 25).

The gate 19 can of course be arranged to allow all packet types emerging from the FIFO store 16 and merely add a distinguishing tag to protocol-violating packet types, with the display unit 20 displaying tagged packet types in a distinctive manner.

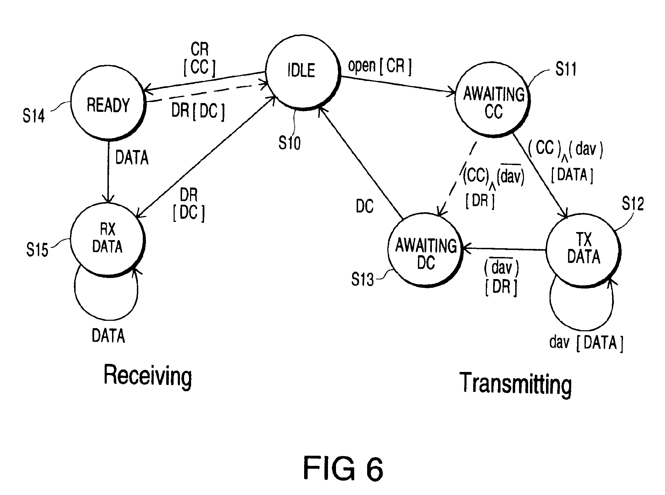

As already noted, the state transition diagram of Figure 3 views the protocol governing the connection of interest, strictly in terms of the connection across the network and what PDU types pass over the network. It is also possible to specify the protocol considered from the point of view of the protocol entities themselves, although such a specification will generally involve primitives passed between protocol layers as well as the PDU types. Thus, Figure 6 illustrates the protocol associated with Figures 2 and 3 in terms of a state transition diagram as implemented by the communicating protocol entities. In this diagram, the PDU types (CR, CC, DATA, DR, DC) and primitives ('open','dav') causing state transitions are shown on the arrows between states, whilst the actions initiated by a state transition are shown in square brackets.

As can be seen, the Figure 6 state transition diagram comprises six states S10-S15, one of which (state S10) is an Idle State, three of which (S11-S13) are associated with data transmission, and the remaining two of which (S14, S15) are concerned with data reception. As the Figure 6 diagram is self-explanatory and will be readily understood by persons skilled in the art, a detailed textual description will not be given. The main point to note is that the diagram differs from that of Figure 3 in certain aspects.

The protocol analyzer can be arranged to follow the progress of a connection in terms of a state transition diagram of the Figure 6 form rather than of the Figure 3 form. In this case, although the matrix store 25 need only contain one copy of the relevant state transition data, it is generally advantageous for the analyzer to separately follow the progress of the connection at the two communicating entities so that the current state memory 27 must now hold two current states, one for each entity. Furthermore, each relevant PDU now has two different aspects: firstly, it serves to indicate that the sending protocol entity has carried out an action from which it can generally be deduced that it has passed from its current state into another state, and secondly, it serves to indicate the stimulus about to be received by the receiving protocol entity and therefore what state transition that entity is about to undergo. However, because PDU type is not the sole determinant of state transitions, there may well be ambiguity existing at least for a limited period, when PDU type alone is used to follow a complex protocol represented in terms of a state transition diagram as viewed by a protocol entity. Accordingly, it is preferred to use a diagram that relies solely on PDU type (such as that of Figure 3) when implementing the protocol analyzer of the invention.

## Claims

1. A protocol analyzer for monitoring a selected communication connection being conducted in accordance with a predetermined protocol between two entities (3,4) by the exchange of protocol data units over a data network (12), said protocol being a cyclically-operating, multiple-state protocol state-to-state transitions of which are conditioned by differing types of protocol data units, and said network (12) being of the type that can support a plurality of simultaneous communication connections between different pairs of entities, said analyzer comprising:
- **monitoring means** (13,14,15) for monitoring the network (12) to derive protocol-unit signals indicative of protocol data units relevant to said selected connection;
- **protocol-follower means** (17,18,27) including **current-state memory means**(27) for storing an indication of the current protocol state of said selected connection, said protocol-follower means being conditioned in dependence on the states (51-55) of said protocol, what types of protocol data units are validly received in each state, and any resulting change in state caused by each validly-received protocol data unit, to follow the execution of said protocol in relation to said selected connection, by examination of each said protocol-unit signal with reference to the current protocol state as indicated by said current-state memory means (27), said protocol-follower means (17,18,27) being operative to update said indication of the current protocol state as appropriate; and
- **alarm means** (22) operatively associated with said protocol-follower means (17,18,27) and arranged to provide an output indication when a said relevant protocol data unit, as represented by the corresponding protocol-unit signal, is an invalid one for the current protocol state.

2. A protocol analyzer according to claim 1, wherein said protocol-follower means (17,18,27) is conditioned in dependence on said protocol as considered in terms of the possible states (51-55) of the overall connection having regard solely to protocol data units exchangeable between the entities (3,4).

3. A protocol analyzer according to claim 1, wherein said protocol-follower means (17,18,27) is conditioned in dependence on said protocol as considered at the communicating entities (3,4), the protocol-follower means being operative to track the progress of the connection of each communicating entity separately with the current protocol state of each entity being held in said current-state memory means (27).

4. A protocol analyzer according to any one of the preceding claims, wherein said protocol-follower means further includes:
- **state memory means** (18) for storing for each state of said protocol, state data indicating what types of protocol data units are validly received in that state and any resulting change in state caused by each validly-received protocol data unit, and
- **processing means** (17) operative to follow the execution of said protocol, by examination of each said protocol-unit signal with reference to said state data associated with the current protocol state.

5. A protocol analyzer according to claim 4, wherein said state memory means (18) comprises a two-dimensional look-up table (25) accessed by current state and protocol-data-unit type as indicated by said protocol-unit signal, said table having for each state (51-55), a valid-unit entry for each protocol-data-unit type validly received in that state and an invalid-unit entry for invalid protocol-data-unit types, each said valid-unit entry indicating the protocol state following receipt of that protocol-data-unit type concerned, and said processing means (17) being operative to access said table (25) in dependence on the current protocol state and the type of the protocol data unit under consideration, whereby to ascertain whether that protocol-data-unit type is valid for the current state and, if so, the identity of the next protocol state.

6. A protocol analyzer according to claim 1, including output means (20) controlled by said alarm means (22) to generate a protocol-data-unit-representing output only for each protocol data unit indicated as invalid by said alarm means.

7. A protocol analyzer according to claim 1, including output means (20) operative to generate a protocol-data-unit-representing output for each said relevant protocol data unit, the output means (20) being controlled by said alarm means (21) to distinguish invalid protocol data units from valid protocol data units.

8. A protocol analyzer according to claim 1, including output means (20) controlled by said alarm means (22) and operative to generate a protocol-data-unit-representing output for each of a limited number of valid relevant protocol data units that immediately precede an invalid protocol data unit as well as for the invalid protocol data unit itself.

9. A protocol analyzer according to any one of the preceding claims, wherein the conditioning of said protocol-follower means (17,18,27) is user modifiable.

10. A protocol analyzer according to any one of the preceding claims, wherein the protocol-follower means (17,18,27) is so conditioned as to permit the user to select predetermined protocol data units that are otherwise valid in particular protocol states, for identification by said alarm means when occurring in those states.

## Patentansprüche

1. Ein Protokollanalysator zum Überwachen einer ausgewählten Kommunikationsverbindung, die in Übereinstimmung mit einem vorbestimmten Protokoll zwischen zwei Einheiten (3, 4) durch den Austausch von Protokolldateneinheiten über ein Datennetzwerk (12) ausgeführt wird, wobei das Protokoll ein zyklisch arbeitendes, Multi-Zustandsprotokoll ist, dessen Zustand-zu-Zustand-Übergänge durch unterschiedliche Typen von Protokolldateneinheiten bedingt sind, und wobei das Netzwerk (12) von dem Typ ist, der eine Mehrzahl von gleichzeitigen Kommunikationsverbindungen zwischen unterschiedlichen Paaren von Einheiten unterstützt, wobei der Analysator folgende Merkmale aufweist:
- eine Überwachungseinrichtung (13, 14, 15) zum Überwachen des Netzwerks (12), um Protokolleinheits-Signale abzuleiten, die Protokolldateneinheiten anzeigen die für die ausgewählte Verbindung relevant sind;
- eine Protokollfolgereinrichtung (17, 18, 21), die eine aktueller-Zustand-Speichereinrichtung (27) zum Speichern einer Anzeige des derzeitigen Protokollzustandes der ausgewählten Verbindung einschließt, wobei die Protokollfolgereinrichtung in Abhängigkeit von den Zuständen (51 - 55) des Protokolls, davon, welche Typen der Protokolldateneinheiten gültig in jedem Zustand empfangen sind, und von irgendeiner sich ergebenden Änderung des Zustands, die durch jede gültig empfangene Protokolldateneinheit bewirkt wird, bedingt ist, um die Ausführung des Protokolls bezüglich der ausgewählten Verbindung zu verfolgen, durch Untersuchen jedes Protokolleinheits-Signals bezüglich des derzeitigen Protokollzustandes, der durch die aktueller-Zustand-Speichereinrichtung (27) angezeigt ist, wobei die Protokollfolgereinrichtung (17, 18, 27) wirksam ist, um die Anzeige des derzeitigen Protokollzustandes geeignetermaßen zu aktualisieren; und
- eine Alarmeinrichtung (22), die wirksam der Protokollfolgereinrichtung (17, 18, 27) zugeordnet ist, und die angeordnet ist, um eine Ausgabeanzeige zu schaffen, wenn eine relevante Protokolldateneinheit, die durch das entsprechende Protokolleinheits-Signal dargestellt ist, für den derzeitigen Protokollzustand ungültig ist.

2. Ein Protokollanalysator gemäß Anspruch 1, bei dem die Protokollfolgereinrichtung (17, 18, 27) in Abhängigkeit von dem Protokoll hinsichtlich der möglichen Zustände (51 - 55) der Gesamtverbindung, nur mit Bezug auf die Protokolldateneinheiten, die zwischen den Einheiten (3, 4) austauschbar sind, bedingt ist.

3. Ein Protokollanalysator gemäß Anspruch 1, bei dem die Protokollfolgereinrichtung (17, 18, 27) in Abhängigkeit von dem Protokoll bei Betrachtung an den kommunizierenden Einheiten (3, 4) bedingt ist, wobei die Protokollfolgereinrichtung wirksam ist, um den Verlauf der Verbindung jeder kommunizierenden Einheit getrennt nachzuverfolgen, wobei der derzeitige Protokollzustand jeder Einheit in der aktueller-Zustand-Speichereinrichtung (27) gehalten ist.

4. Ein Protokollanalysator gemäß irgendeinem der vorhergehenden Ansprüche, bei dem die Protokollfolgereinrichtung ferner folgende Merkmale einschließt:
- eine Zustandsspeichereinrichtung (18) zum Speichern von Zustandsdaten für jeden Zustand des Protokolls Zustandsdaten, die anzeigen, welche Typen von Protokolldateneinheiten gültig in diesem Zustand empfangen wurden, und jegliche sich ergebende Änderung des Zustands, der durch jede gültig empfangene Protokolldateneinheit bewirkt wird, und
- eine Verarbeitungseinrichtung (17), die wirksam ist, um die Ausführung des Protokolls durch Untersuchung jedes Protokolleinheits-Signals bezüglich der Zustandsdaten, die dem derzeitigen Protokollzustand zugeordnet sind, nachzuverfolgen.

5. Ein Protokollanalysator gemäß Anspruch 4, bei dem die Zustandsspeichereinrichtung (18) eine zweidimensionale Nachschlagtabelle (25) umfaßt, auf die durch den derzeitigen Zustand und den Protokolldateneinheitstyp zugegriffen wird, wie er durch das Protokolleinheits-Signal angezeigt ist, wobei die Tabelle für jeden Zustand (51 - 55) einen gültige-Einheit-Eintrag für jeden Protokolldateneinheitstyp, der gültig in diesem Zustand empfangen wird, und einen ungültige-Einheit-Eintrag für ungültige Protokolldateneinheitstypen aufweist, wobei jeder gültige-Einheit-Eintrag den Protokollzustand anzeigt, der dem Empfang des betreffenden Protokolldateneinheitstypes folgt, und wobei die Verarbeitungseinrichtung (17) wirksam ist, um auf die Tabelle (25) in Abhängigkeit von dem derzeitigen Protokollzustand und von dem Typ der Protokolldateneinheit, die betrachtet wird, zuzugreifen, wodurch sichergestellt wird, ob der Protokolldateneinheitstyp für den derzeitigen Zustand gültig ist, und wenn dies der Fall ist, die Identität des nächsten Protokollzustands.

6. Ein Protokollanalysator gemäß Anspruch 1, der eine Ausgabeeinrichtung (20) einschließt, die durch die Alarmeinrichtung (22) gesteuert ist, um eine Protokolldateneinheit-darstellende Ausgabe nur für jede Protokolldateneinheit zu erzeugen, die durch die Alarmeinrichtung als ungültig angezeigt ist.

7. Ein Protokollanalysator gemäß Anspruch 1, der eine Ausgabeeinrichtung (20) einschließt, die wirksam ist, um eine Protokolldateneinheit-darstellende Ausgabe für jede der relevanten Protokolldateneinheit zu erzeugen, wobei die Ausgabeeinrichtung (20) durch die Alarmsteuerung (21) gesteuert ist, um ungültige Protokolldateneinheiten von gültigen Protokolldateneinheiten zu unterscheiden.

8. Ein Protokollanalysator gemäß Anspruch 1, der eine Ausgabeeinrichtung (20) einschließt, die durch die Alarmeinrichtung (22) gesteuert ist, und die wirksam ist, um eine Protokolldateneinheit-darstellende Ausgabe für jede einer begrenzten Anzahl von gültigen, relevanten Protokolldateneinheiten zu erzeugen, die einer ungültigen Protokolldateneinheit unmittelbar vorangehen, sowie für die ungültige Protokolldateneinheit selbst.

9. Ein Protokollanalysator gemäß einem der vorhergehenden Ansprüche, bei dem die Bedingungseinstellung der Protokollfolgereinrichtung (17, 18, 21) anwendermodifizierbar ist.

10. Ein Protokollanalysator gemäß einem der vorhergehenden Ansprüche, bei dem die Protokollfolgereinrichtung (17, 18, 27) derart bedingt ist, daß es dem Anwender ermöglicht wird, vorbestimmte Protokolldateneinheiten, die ansonsten in bestimmten Protokollzuständen gültig sind, für eine Identifikation durch die Alarmeinrichtung auszuwählen, wenn sie in diesen Zuständen auftreten.

## Revendications

1. Analyseur de protocole pour surveiller une connexion de communication sélectionnée, effectuée selon un protocole prédéterminé entre deux entités (3, 4), par l'échange d'éléments de données de protocole sur un réseau de données (12), ledit protocole étant un protocole à états multiples fonctionnant de façon cyclique, dont les transitions entre états sont conditionnées par des types différents d'éléments de données de protocole, et ledit réseau (12) étant du type pouvant traiter plusieurs connexions de communication simultanées entre des paires différentes d'entités, ledit analyseur comprenant:
- des moyens de surveillance (13, 14, 15), pour surveiller le réseau (12), pour en déduire des signaux d'éléments de protocole représentant les éléments de données de protocole concernant ladite connexion sélectionnée;
- des moyens suiveurs de protocole (17, 18, 27), comportant des moyens de mémoire d'état courant (27) pour stocker une indication de l'état courant du protocole de ladite connexion sélectionnée, lesdits moyens suiveurs de protocole étant conditionnés selon les états (51-55) dudit protocole, les types d'éléments de données de protocole qui sont reçus de façon valide dans chaque état, et toute variation d'état résultante provoquée par chaque élément de données de protocole reçu de façon valide, pour suivre l'exécution dudit protocole en ce qui concerne ladite connexion sélectionnée, par l'examen de chaque dit signal d'élément de protocole en référence à l'état courant du protocole comme indiqué par lesdits moyens de mémoire d'état courant (27), lesdits moyens suiveurs de protocole (17, 18, 27) fonctionnant en mettant à jour ladite indication de l'état courant du protocole comme approprié; et
- des moyens d'alarme (22) associés de façon fonctionnelle auxdits moyens suiveurs de protocole (17, 18, 27), et disposés de façon à fournir une indication de sortie lorsqu'un dit élément de données de protocole pertinent, comme représenté par le signal d'élément de protocole correspondant, est un élément invalide pour l'état courant du protocole.

2. Analyseur de protocole selon la revendication 1, dans lequel lesdits moyens suiveurs de protocole (17, 18, 27) sont conditionnés selon ledit protocole comme considéré en termes des états possibles (51-55) de la connexion globale ne concernant que les éléments de données de protocole pouvant être échangés entre les entités (3, 4).

3. Analyseur de protocole selon la revendication 1, dans lequel lesdits moyens suiveurs de protocole (17, 18, 27) sont conditionnés selon ledit protocole comme considéré aux entités en communication (3, 4), les moyens suiveurs de protocole fonctionnant en suivant l'avancement de la connexion de chaque entité en communication, séparément de l'état courant du protocole de chaque entité qui est conservé dans lesdits moyens de mémoire d'état courant (27).

4. Analyseur de protocole selon l'une quelconque des revendications précédentes, dans lequel lesdits moyens suiveurs de protocole comportent en outre:
- des moyens de mémoire d'état (18) pour stocker pour chaque état dudit protocole, des données d'état indiquant quels types d'éléments de données de protocole sont reçus de façon valide dans cet état, et toute variation d'état résultante provoquée par chaque élément de données de protocole reçu de façon valide, et
- des moyens de traitement (17) fonctionnant en suivant l'exécution dudit protocole, en examinant chaque dit signal d'élément de protocole en référence auxdites données d'état associées à l'état courant du protocole.

5. Analyseur de protocole selon la revendication 4, dans lequel lesdits moyens de mémoire d'état (18) comprennent une table de correspondance à deux dimensions (25), à laquelle il est accédé par l'état courant et le type d'élément de données de protocole comme indiqué par ledit signal d'élément de protocole, ladite table ayant pour chaque état (51-55), une entrée d'élément valide pour chaque type d'élément de données de protocole reçu de façon valide dans cet état, et une entrée d'élément invalide pour les types d'éléments de données de protocole invalides, chaque dite entrée d'élément valide indiquant l'état du protocole qui suit la réception du type d'élément de données de protocole concerné, et lesdits moyens de traitement (17) fonctionnant en ayant accès à ladite table (25) selon l'état courant du protocole et le type d'élément de données de protocole considéré, de façon à s'assurer que ce type d'élément de données de protocole est valide pour l'état courant et, si tel est le cas, de l'identité de l'état suivant du protocole.

6. Analyseur de protocole selon la revendication 1, comportant des moyens de sortie (20) contrôlés par lesdits moyens d'alarme (22) pour ne générer une sortie représentant l'élément de données de protocole que pour chaque élément de données de protocole indiqué comme invalide par lesdits moyens d'alarme.

7. Analyseur de protocole selon la revendication 1, comportant des moyens de sortie (20) fonctionnant en générant une sortie représentant l'élément de données de protocole pour chaque dit élément de données de protocole pertinent, les moyens de sortie (20) étant contrôlés par lesdits moyens d'alarme (21) pour distinguer les éléments de données de protocole invalides des éléments de données de protocole valides.

8. Analyseur de protocole selon la revendication 1, comportant des moyens de sortie (20) contrôlés par lesdits moyens d'alarme (22) et fonctionnant en générant une sortie représentant l'élément de données de protocole pour chaque élément d'un nombre limité d'éléments de données de protocole valides qui précède immédiatement un élément de données de protocole invalide, ainsi que pour l'élément de données de protocole invalide lui-même.

9. Analyseur de protocole selon l'une quelconque des revendications précédentes, dans lequel le conditionnement desdits moyens suiveurs de protocole (17, 18, 27) est modifiable par l'utilisateur.

10. Analyseur de protocole selon l'une quelconque des revendications précédentes, dans lequel les moyens suiveurs de protocole (17, 18, 27) sont conditionnés de façon à permettre à l'utilisateur de sélectionner les éléments de données de protocole prédéterminés qui sont par ailleurs valides dans des états particuliers du protocole, pour identification pas lesdits moyens d'alarme lorsqu'ils apparaissent dans ces états.
